# EUROPEAN PATENT APPLICATION

(11) **EP 3 791 991 A1**
(43) Date of publication of application: **17.03.2021**
(21) Application number: 19799780.2
(22) Date of filing: 08.05.2019
(51) Int. Cl.: B23K 20/12

(54) **FRICTION JOINING DEVICE AND METHOD FOR OPERATING SAME**

(30) Priority: 09.05.2018 JP 2018090654
(71) Applicant: Kawasaki Jukogyo Kabushiki Kaisha, Hyogo 650-8670 (JP)
(72) Inventor: MURAMATSU, Yoshitaka, Hyogo 650-8670 (JP); OHASHI, Ryoji, Hyogo 650-8670 (JP); TAKEOKA, Naoki, Hyogo 650-8670 (JP); FUKUDA, Takuya, Hyogo 650-8670 (JP)
(74) Representative: Witte, Weller & Partner Patentanwälte mbB
(86) International application number: PCT/JP2019/018419
(87) International publication number: WO 2019/216349

(57) **Abstract**

A friction welding apparatus (1) includes a tool (10), a rotary driver (8) configured to rotate the tool (10), a linear driver (7) configured to reciprocate the tool (10), and a control device (30) configured to: (A) control the linear driver (7) and the rotary driver (8) so that the tool (10) is rotated while a tip-end part of the tool (10) is pressed against a to-be-joined object (W) to form a through-hole (40) in the to-be-joined object (W) so that a softened second member (W2) sticks into a softened first member (W1) to join the to-be-joined object (W).

## Description

### TECHNICAL FIELD

The present disclosure relates to a friction welding apparatus and a method of operating the same.

### BACKGROUND ART

A method of joining dissimilar metal plates is known in which a first metal plate is piled up with a second metal plate made of material of which a melting point is higher than the first metal plate, and these metal plates are joined to each other using frictional heat (e.g., see Patent Document 1). In the joining method disclosed in Patent Document 1, a pin having a curved surface is provided. During a softening process of the first metal plate and the second metal plate, softened metal parts which are pushed away along the curved surface of the pin continue integrally, and at the boundary of both the softened metal parts, the softened metal part of the second metal plate covers the softened metal part of the first metal plate to serve as an anchoring structure, thereby joining the first metal plate and the second metal plate.

### [Reference Document of Conventional Art]

### [Patent Document]

[Patent Document 1] JP5854451B2

### DESCRIPTION OF THE DISCLOSURE

### [Problem to be Solved by the Disclosure]

However, in the joining method disclosed in Patent Document 1, a recess is formed in the joined part by the pin, and water tends to be accumulated in the recess. When water exists in the joined part, the metal with a larger ionization tendency may corrode at the boundary of the both softened metal parts.

Here, in order to prevent the corrosion of the metal, it is possible to apply the electrodeposition coating. However, when the joined part is immersed in a coating fluid pan while an opening of the recess formed in the joined part is turned downwardly, air is caught in the recess to impede the coating fluid from entering into the recess, and therefore, the coating may become inadequate.

The present disclosure is made in view of solving the problem, and one purpose thereof is to provide a friction welding apparatus and a method of operating the same, capable of realizing an appropriate corrosion resistance, even if a plurality of members made of different materials are joined by a friction welding method.

### [Summary of the Disclosure]

In order to solve the conventional problem described above, a friction welding apparatus according to the present disclosure is a friction welding apparatus configured to join a to-be-joined object having a first member and a second member by softening the to-be-joined object with frictional heat. The apparatus includes a tool formed cylindrically, and rotatable about an axis thereof and reciprocatable in a direction along the axis, a rotary driver configured to rotate the tool about the axis, a linear driver configured to reciprocate the tool along the axis, and a control device. The first member is disposed opposing to the tool and is made of a different type of material from the second member. The control device (A) controls the linear driver and the rotary driver so that the tool is rotated about the axis while a tip-end part of the tool is pressed against the to-be-joined object to form a through-hole in the to-be-joined object so that the softened second member sticks into the softened first member to join the to-be-joined object.

According to this, even if water enters into the through-hole of the to-be-joined object, the water is discharged from the through-hole. Thus, it can reduce corrosion of one of metals with a larger ionization tendency at the joining interface of the to-be-joined object.

Moreover, when applying the electrodeposition coating, unlike a recess, air inside the through-hole can be taken out by coating fluid and, thus, the coating fluid can sufficiently be taken into the through-hole so as to coat inside the through-hole. Therefore, it can reduce corrosion of one of metals with a larger ionization tendency at the joining interface of the to-be-joined object.

Moreover, a friction welding apparatus according to the present disclosure is a friction welding apparatus configured to join a to-be-joined object having a first member and a second member by softening the to-be-joined object with frictional heat. The friction welding apparatus includes a tool formed cylindrically, and rotatable about an axis thereof and reciprocatable in a direction along the axis, a rotary driver configured to rotate the tool about the axis, a linear driver configured to reciprocate the tool along the axis, a cutting tool, a first driver configured to drive the cutting tool, and a control device. The first member is disposed opposing to the tool and is made of a different type of material from the second member. The control device (B) controls the linear driver and the rotary driver so that the tool is rotated about the axis while a tip-end part of the tool is pressed against the to-be-joined object to form a recess in the to-be-joined object so that the softened second member sticks into the softened first member to join the to-be-joined object, and then (C) controls the first driver so that a through-hole is formed in the recess by the cutting tool.

According to this, since the through-hole is formed in the recess, even if water exists inside the recess of the to-be-joined object, the water is discharged from the through-hole. Thus, it can reduce corrosion of one of metals with a larger ionization tendency at the joining interface of the to-be-joined object.

Moreover, when applying the electrodeposition coating, air caught inside the recess can be discharged through the through-hole and, thus, the coating fluid can sufficiently be taken into the recess so as to sufficiently perform the coating.

Moreover, a method of operating a friction welding apparatus according to the present disclosure is a method of operating a friction welding apparatus configured to join a to-be-joined object having a first member and a second member by softening the to-be-joined object with frictional heat. The friction welding apparatus includes a tool formed cylindrically, and rotatable about an axis thereof and reciprocatable in a direction along the axis, a rotary driver configured to rotate the tool about the axis, and a linear driver configured to reciprocate the tool along the axis. The first member is disposed opposing to the tool and is made of a different type of material from the second member. The method includes the step of (A) operating the linear driver and the rotary driver so that the tool is rotated about the axis while a tip-end part of the tool is pressed against the to-be-joined object to form a through-hole in the to-be-joined object so that the softened second member sticks into the softened first member to join the to-be-joined object.

According to this, even if water enters into the through-hole of the to-be-joined object, the water is discharged from the through-hole. Thus, it can reduce corrosion of one of metals with a larger ionization tendency at the joining interface of the to-be-joined object.

Moreover, when applying the electrodeposition coating, unlike a recess, air inside the through-hole can be taken out by coating fluid and, thus, the coating fluid can sufficiently be taken into the through-hole so as to coat inside the through-hole. Therefore, it can reduce corrosion of one of metals with a larger ionization tendency at the joining interface of the to-be-joined object.

Moreover, a method of operating a friction welding apparatus according to the present disclosure is a method of operating a friction welding apparatus configured to join a to-be-joined object having a first member and a second member by softening the to-be-joined object with frictional heat. The friction welding apparatus includes a tool formed cylindrically, and rotatable about an axis thereof and reciprocatable in a direction along the axis, a rotary driver configured to rotate the tool about the axis, a linear driver configured to reciprocate the tool along the axis, a cutting tool, and a first driver configured to drive the cutting tool. The first member is disposed opposing to the tool and is made of a different type of material from the second member. The method includes the steps of (B) operating the linear driver and the rotary driver so that the tool is rotated about the axis while a tip-end part of the tool is pressed against the to-be-joined object to form a recess in the to-be-joined object so that the softened second member sticks into the softened first member to join the to-be-joined object, and (C) then operating the first driver so that a through-hole is formed in the recess by the cutting tool.

According to this, since the through-hole is formed in the recess, even if water exists inside the through-hole of the to-be-joined object, the water is discharged from the through-hole. Thus, it can reduce corrosion of one of metals with a larger ionization tendency at the joining interface of the to-be-joined object.

Moreover, when applying the electrodeposition coating, air caught inside the recess can be discharged through the through-hole and, thus, the coating fluid can sufficiently be taken into the recess so as to sufficiently perform the coating.

The above-described purpose, other purposes, features, and advantages of the present disclosure will become clear from detailed description of preferred embodiments described below with reference to the accompanying drawings.

### [Effect of the Disclosure]

According to the friction welding apparatus and the method of operating the same of the present disclosure, an appropriate corrosion resistance can be achieved even if a plurality of members made of different materials are joined by a friction welding method.

### BRIEF DESCRIPTION OF DRAWINGS

Fig. 1 is a schematic view illustrating an outline structure of a friction welding apparatus according to Embodiment 1.
Fig. 2 is a flowchart illustrating one example of operation of the friction welding apparatus according to Embodiment 1.
Fig. 3 is a schematic view illustrating a substantial part of the friction welding apparatus according to Embodiment 1.
Fig. 4 is a flowchart illustrating one example of operation of a friction welding apparatus according to Embodiment 2.
Fig. 5 is a schematic view illustrating a substantial part of the friction welding apparatus according to Embodiment 2.
Fig. 6 is a flowchart illustrating one example of operation of a friction welding apparatus of Modification 1 in Embodiment 2.
Fig. 7 is a schematic view illustrating an outline structure of a friction welding apparatus according to Embodiment 3.
Fig. 8 is a flowchart illustrating one example of operation of the friction welding apparatus according to Embodiment 3.
Fig. 9 is a schematic view illustrating a substantial part of the friction welding apparatus according to Embodiment 3.
Fig. 10 is a schematic view illustrating a substantial part of the friction welding apparatus in Modification 1.
Fig. 11 is a schematic view illustrating a substantial part of the friction welding apparatus in Modification 2.

### MODES FOR CARRYING OUT THE DISCLOSURE

Hereinafter, desirable embodiments of the present disclosure are described with reference to the drawings. Note that, below, the same reference characters are assigned to the same or corresponding components throughout the drawings to omit redundant description. Moreover, throughout the drawings, components which are needed to describe the present disclosure are selectively illustrated, and illustration of other components may be omitted. Further, the present disclosure is not limited to the following embodiments.

### (Embodiment 1)

A friction welding apparatus according to Embodiment 1 is a friction welding apparatus which joins a to-be-joined object having a first member and a second member by softening the to-be-joined object with frictional heat. The apparatus includes a tool which is formed cylindrically, and is rotatable about its axis and reciprocatable in a direction along the axis, a rotary driver which rotates the tool about the axis, a linear driver which reciprocates the tool along the axis, and a control device. The first member is disposed opposing to the tool and is made of a different type of material from the second member. The control device (A) controls the linear driver and the rotary driver so that the tool is rotated about the axis while a tip-end part of the tool is pressed against the to-be-joined object to form a through-hole in the to-be-joined object so that the softened second member sticks into the softened first member to join the to-be-joined object.

Alternatively, in the friction welding apparatus according to Embodiment 1, the control device may control the linear driver and the rotary driver, during (A), so that the tip-end part of the tool penetrates the second member of the to-be-joined object.

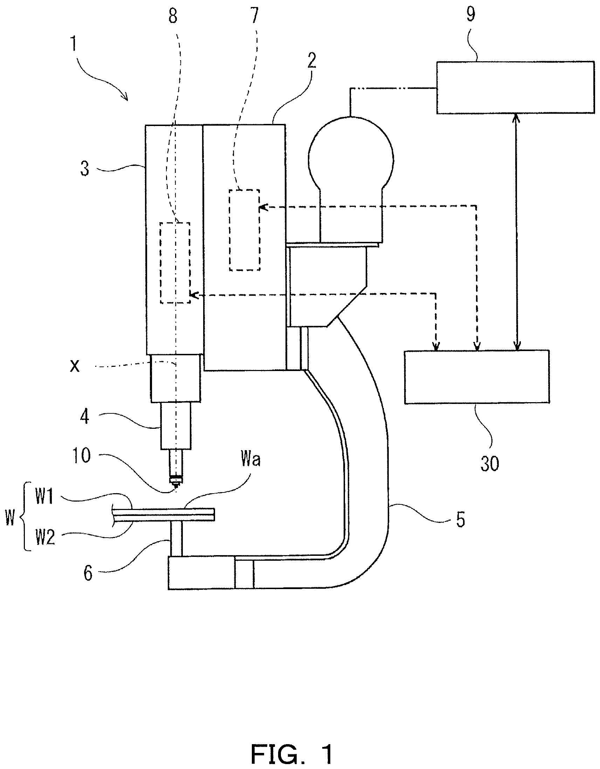

Hereinafter, one example of the friction welding apparatus according to Embodiment 1 is described in detail with reference to Figs. 1 to 3.

### [Configuration of Friction Welding Apparatus]

Fig. 1 is a schematic view illustrating an outline structure of the friction welding apparatus according to Embodiment 1.

As illustrated in Fig. 1, a friction welding apparatus 1 according to Embodiment 1 includes a tool 10, a base body 2, a movable body 3, a tool holder 4, a linear driver 7, a rotary driver 8, and a control device 30. The apparatus softens with frictional heat and agitates (stirs) a point joining part Wa of a to-be-joined object W to cause a plastic flow of the point joining part Wa to perform a friction welding.

The base body 2 is detachably attached to a tip-end part of a robotic arm 9. The movable body 3 is attached to the base body 2 movably in a direction of an axis X of the tool holder 4. The tool holder 4 is provided to a tip-end part of the movable body 3.

The tool holder 4 is rotatable about its axis X, and is movable in the direction of the axis X integrally with the movable body 3. The tool 10 is detachably provided to a tip-end part of the tool holder 4. Note that the attachment and detachment (replacement) of the tool 10 may be performed by an operator, or may be performed by a robotic arm different from the robotic arm 9.

Moreover, the linear driver 7 is disposed inside the base body 2. The linear driver 7 moves the movable body 3 (tool 10) linearly in the direction of the axis X. For example, the linear driver 7 may be an electric motor (servomotor).

The rotary driver 8 is disposed inside the movable body 3. The rotary driver 8 rotates the tool holder 4 and the tool 10 about the axis X. For example, the rotary driver 8 may be an electric motor (servomotor).

Further, a curved frame 5 formed in a substantially C-shape (a substantially L-shape) is fixed to the base body 2. The curved frame 5 is formed so that its tip-end part opposes to the tool 10. Moreover, a support 6 is provided to a tip-end part of the curved frame 5. The support 6 supports the to-be-joined object W. That is, in Embodiment 1, the base body 2, the movable body 3, the tool holder 4, the curved frame 5, and the support 6 are comprised of a C-shaped gun (C-shaped frame).

In Embodiment 1, the to-be-joined object W is comprised of a plate-like first member W1 and a plate-like second member W2. The first member W1 may be made of metal (e.g., aluminum) or fiber-reinforced plastic (e.g., carbon fiber reinforced plastic), and the second member W2 may be made of a different metal (e.g., steel) from the first member W1.

Note that although in Embodiment 1 the to-be-joined object W is comprised of the two kinds of members (the first member W1 and the second member W2), it may, but not limited to, be comprised of three or more kinds of members.

Moreover, although in Embodiment 1 the to-be-joined object W is comprised of the plate-like first member W1 and the plate-like second member W2, the shape of the to-be-joined object W (the first member W1 and the second member W2) may be arbitrary, and, for example, it may be, but not limited to, a rectangular parallelepiped shape or may be an arc shape.

The control device 30 includes a processor, such as a microprocessor and a CPU, and a memory, such as a ROM and a RAM (none of them is illustrated). The memory stores information on a basic program, various fixed data, etc. The processor controls various operations of the linear driver 7, the rotary driver 8, and the robotic arm 9 by reading and executing software, such as the basic program stored in the memory.

Note that the control device 30 may be comprised of a sole control device 30 which carries out a centralized control, or may be comprised of a plurality of control devices 30 which collaboratively carry out a distributed control. Moreover, the control device 30 may be comprised of a microcomputer or may be comprised of a MPU, a PLC (Programmable Logic Controller), a logic circuit, etc.

### [Operation of Friction Welding Apparatus (Method of Operating Friction Welding Apparatus)]

Next, a method of operating the friction welding apparatus 1 according to Embodiment 1 is described with reference to Figs. 1 to 4. Note that the following operations are performed by the processor of the control device 30 reading the program stored in the memory.

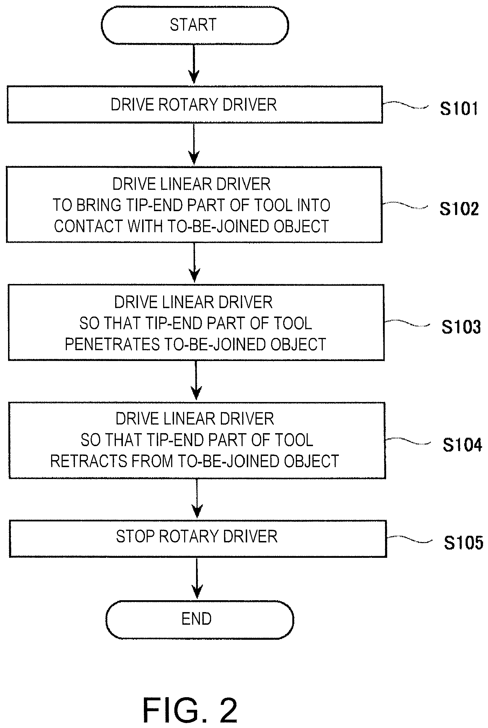

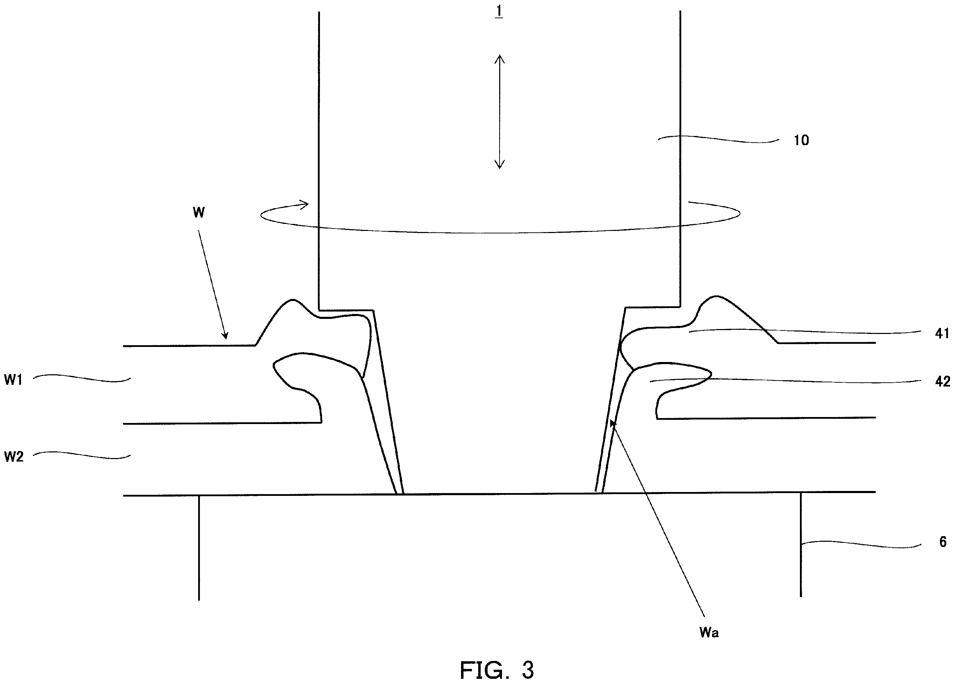

Fig. 2 is a flowchart illustrating one example of operation of the friction welding apparatus according to Embodiment 1. Fig. 3 is a schematic view illustrating a substantial part of the friction welding apparatus according to Embodiment 1, and illustrates a state where the tool performs a friction welding.

First, the operator places the to-be-joined object W on an upper surface of the support 6. Then, the operator operates an input device (not illustrated) to input a joining execution of the to-be-joined object W into the control device 30.

Then, as illustrated in Fig. 2, the control device 30 drives the rotary driver 8 to rotate the tool holder 4 and the tool 10 at a given rotational speed (e.g., 50 to 6,000rpm) (Step S101). Next, in the state where the tool holder 4 and the tool 10 are rotated, the control device 30 drives the linear driver 7 to bring the tip-end part of the tool 10 into contact with the point joining part Wa of the to-be-joined object W (Step S102).

At this time, the control device 30 controls the linear driver 7 so that the tool 10 is pressed against the to-be-joined object W by a given pressing force set beforehand (e.g., 4kN to 70kN). Note that the given rotational speed and the given pressing force may be suitably set beforehand by an experiment etc.

Therefore, the point joining part Wa on the first member W1 and the second member W2 is softened by the tip-end part of the tool 10, and a plastic flow of the to-be-joined object W is caused. Moreover, a second part 42 which is the softened part of the second member W2 enters into a first part 41 which is the softened part of the first member W1 to form an anchoring structure.

Next, the control device 30 drives the linear driver 7 so that the tip end of the tool 10 reaches a contact surface of the support 6 for the to-be-joined object W (Step S103). Then, when the tip end of the tool 10 reaches the contact surface of the support 6 for the to-be-joined object W, the control device 30 drives the linear driver 7 so that the tip-end part of the tool 10 separates from the to-be-joined object W (Step S104). Next, the control device 30 stops the rotary driver 8 (Step S 105), and ends this program.

Therefore, as illustrated in Fig. 3, a through-hole 40 is formed in the point joining part Wa of the to-be-joined object W. Moreover, the first part 41 which is pushed away by the tip-end part of the tool 10 moves to an opening of the through-hole 40 of the first member W1.

Note that, when joining the next point joining part Wa in the to-be-joined object W, the control device 30 may move the friction welding apparatus 1 above the next point joining part Wa without stopping the rotary driver 8, and perform the operation at Step S 102.

With the friction welding apparatus 1 according to Embodiment 1 configured in this way, the anchoring effect is acquired by performing the friction welding to the to-be-joined object W in which the second part 42 which is the softened part of the second member W2 enters into the first part 41 which is the softened part of the first member W1 to increase a tensile-shear strength, and also to increase a peel strength relatively.

Moreover, in the friction welding apparatus 1 according to Embodiment 1, by forming the through-hole 40 in the point joining part Wa of the to-be-joined object W, since water is discharged from the through-hole 40 even if the water exists in the point joining part Wa, corrosion of the metal with a larger ionization tendency among the first member W1 and the second member W2 can be reduced.

Note that, in the friction welding apparatus 1 according to Embodiment 1, although the control device 30 controls the linear driver 7 so that the tip end of the tool 10 reaches the contact surface of the support 6 for the to-be-joined object W, it is not limited to this configuration. For example, the control device 30 may control the linear driver 7 so that the tip end of the tool 10 may penetrate the contact surface of the support 6 for the to-be-joined object W. In this case, a recess may be formed for the tip-end part of the tool 10 advancing to the contact surface (upper surface) of the support 6 with the to-be-joined object W.

### (Embodiment 2)

A friction welding apparatus according to Embodiment 2 is the friction welding apparatus according to Embodiment 1 in which the control device controls the linear driver and the rotary driver, during (A), so that (A1) the tool is rotated about the axis while the tip-end part of the tool is pressed against the to-be-joined object to form a recess in the to-be-joined object so that the softened second member sticks in the softened first member to join the to-be-joined object, and (A2) the tip-end part of the tool reaches a given first position set beforehand to form the through-hole in the to-be-joined object.

Moreover, in the friction welding apparatus according to Embodiment 2, the first position may be 0.2mm or less from a surface of the second member which is opposite from a surface which contacts the first member.

Moreover, in the friction welding apparatus according to Embodiment 2, the control device may control the linear driver and the rotary driver, during (A2), so that the tip-end part of the tool reaches the given first position set beforehand to adhere the softened second member in the bottom of the recess to the tip-end part of the tool, and the tool then separates from the to-be-joined object to form the through-hole in the to-be-joined object.

Moreover, in the friction welding apparatus according to Embodiment 2, the first position may be 0.1mm or less from the surface of the second member which is opposite from the surface which contacts the first member.

Further, in the friction welding apparatus according to Embodiment 2, the linear driver and the rotary driver are controlled, during (A2), so that the tip-end part of the tool reaches the given first position set beforehand, and the softened second member in the bottom of the recess is pushed away by the tip-end part of the tool to form the through-hole in the to-be-joined object.

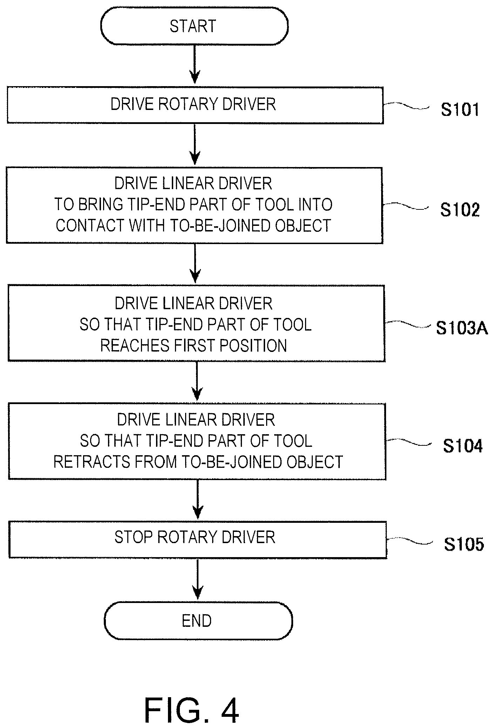

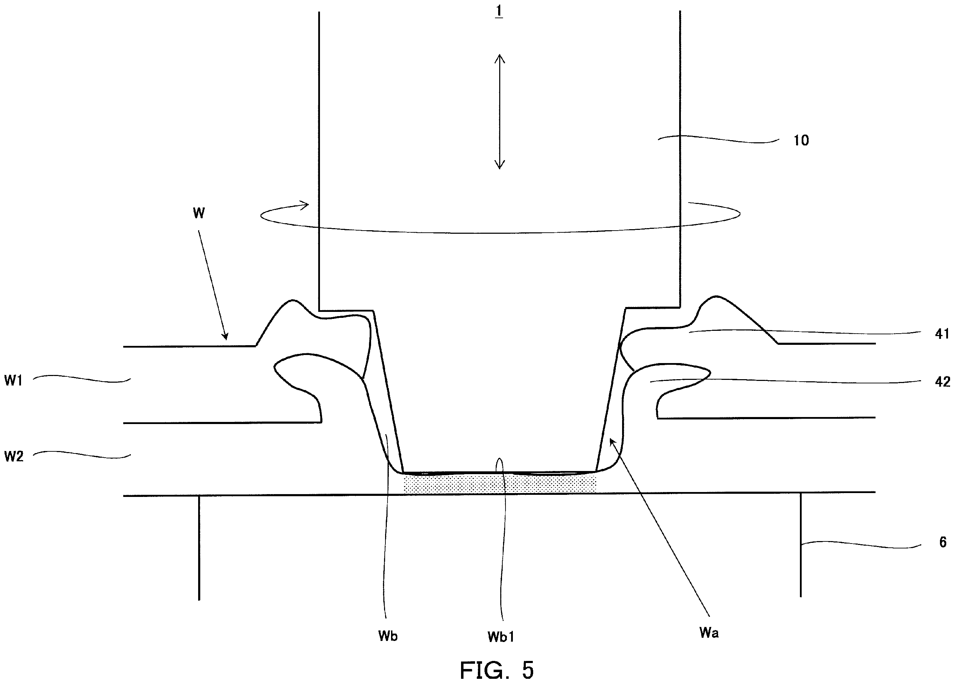

Below, one example of the friction welding apparatus according to Embodiment 2 is described in detail with reference to Figs. 4 and 5. Note that, since the configuration of the friction welding apparatus 1 according to Embodiment 2 is the same as the friction welding apparatus 1 according to Embodiment 1, the detailed description thereof is omitted.

### [Operation and Effects of Friction Welding Apparatus]

Fig. 4 is a flowchart illustrating one example of operation of the friction welding apparatus according to Embodiment 2. Fig. 5 is a schematic view illustrating a substantial part of the friction welding apparatus according to Embodiment 2, and illustrates a state where the tool performs the friction welding. Note that the following operations are performed by the processor of the control device 30 reading the program stored in the memory.

As illustrated in Fig. 4, the operation of the friction welding apparatus 1 according to Embodiment 2 is fundamentally the same as the operation according to Embodiment 1, but it differs in that processing at Step S103A is performed instead of Step S 103.

In detail, in the processing at Step S102, the control device 30 brings the tip-end part of the tool 10 in contact with the point joining part Wa of the to-be-joined object W while the tool holder 4 and the tool 10 are rotated. Next, the control device 30 drives the linear driver 7 so that the tip end of the tool 10 reaches the first position (Step S103A). Note that positional information on the tip end of the tool 10 is detected by a position detector (not illustrated) and is outputted to the control device 30.

Here, the first position is a position set arbitrarily within a range larger than 0% and less than 100%, when the surface of the second member W2 which contacts the first member W1 is set as 0% and the surface of the second member W2 which contacts the support 6 is set as 100%.

Note that, in terms of adhering (sticking, or agglutinating) the softened second member W2 to the tip-end part of the tool 10, the first position may be 95% or more, may be 98% or more, or may be 99% or more. Moreover, in terms of adhering (sticking, or agglutinating) the softened second member W2 to the tip-end part of the tool 10, the first position may be within a range of 0.2mm or less from the surface of the second member W2 which contacts the support 6 (the surface of the second member W2 which is opposite from the surface which contacts the first member W1).

Therefore, as illustrated in Fig. 5, a recess Wb is formed in the to-be-joined object W, the second part 42 which is the softened part of the second member W2 enters into the first part 41 which is the softened part of the first member W1, and therefore, the anchoring structure is formed. Moreover, the softened second member W2 in a bottom Wb1 of the recess Wb adheres (sticks or agglutinate) to the tip-end part of the tool 10. Note that, in Fig. 5, the softened part of the second member W2 adhered to the tip-end part of the tool 10 is illustrated by mesh.

Next, the control device 30 drives the linear driver 7 so that the tip-end part of the tool 10 separates from the to-be-joined object W (Step S104). Thus, since the softened part of the second member W2 adhered (sticks or agglutinate) to the tip-end part of the tool 10 is drawn out from the to-be-joined part Wa together with the tool 10, the through-hole is formed in the recess Wb.

The friction welding apparatus 1 according to Embodiment 2 configured in this way also has similar operation and effects to the friction welding apparatus 1 according to Embodiment 1.

Note that, although in the friction welding apparatus 1 according to Embodiment 2 the through-hole is formed by adhering (sticking, or agglutinating) the softened second member W2 to the tip-end part of the tool 10, and separating the tool from the to-be-joined object W, it is not limited to this configuration.

For example, in terms of causing the material of the second member W2 to carry out the plastic flow to the surface of the second member W2 which contacts the support 6, the first position may be within a range of 0.1mm or less from the surface of the second member W2 which contacts the support 6.

Therefore, the recess Wb is formed in the to-be-joined object W, the second part 42 which is the softened part of the second member W2 enters into the first part 41 which is the softened part of the first member W1, and therefore, the anchoring structure is formed. Moreover, the part of the softened second member W2 in the bottom Wb1 of the recess Wb is pushed away by the rotation of the tip-end part of the tool 10, and the through-hole is formed in the bottom Wb1 of the recess Wb.

### [Modification 1]

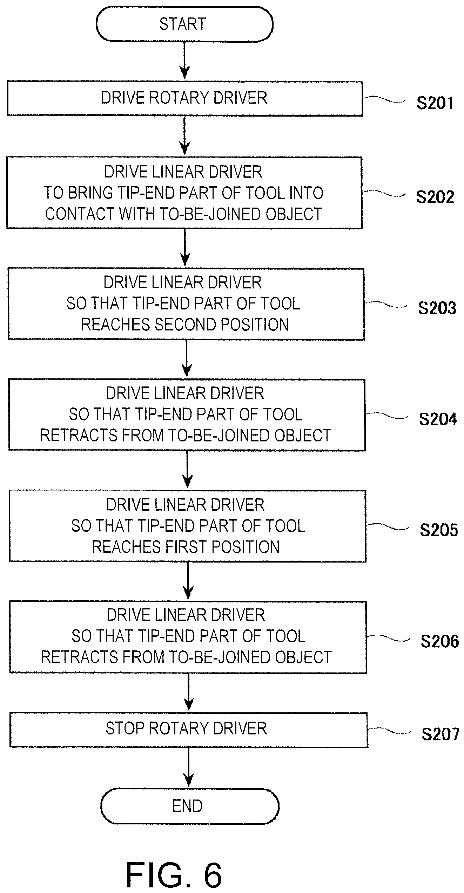

Next, a modification of the friction welding apparatus according to Embodiment 2 is described with reference to Fig. 6. Note that, since the configuration of a friction welding apparatus of Modification 1 in Embodiment 2 is the same as the friction welding apparatus 1 according to Embodiment 1, the detailed description thereof is omitted.

### [Operation and Effects of Friction Welding Apparatus]

Fig. 6 is a flowchart illustrating one example of operation of the friction welding apparatus of Modification 1 in Embodiment 2. Note that the following operations are performed by the processor of the control device 30 reading the program stored in the memory.

First, the operator places the to-be-joined object W on the upper surface of the support 6. Next, the operator operates the input device (not illustrated) to input the joining execution of the to-be-joined object W into the control device 30.

Then, as illustrated in Fig. 6, the control device 30 drives the rotary driver 8 to rotate the tool holder 4 and the tool 10 at the given rotational speed (e.g., 50 to 6,000rpm) (Step S201). Next, while the tool holder 4 and the tool 10 are rotated, the control device 30 drives the linear driver 7 to bring the tip-end part of the tool 10 into contact with the point joining part Wa of the to-be-joined object W (Step S202).

At this time, the control device 30 controls the linear driver 7 so that the tool 10 is pressed against the to-be-joined object W by the given pressing force set beforehand (e.g., 4kN to 70kN). Note that the given rotational speed and the given pressing force may be suitably set beforehand by an experiment etc.

Therefore, the point joining part Wa on the first member W1 and the second member W2 is softened by the tip-end part of the tool 10 to cause the plastic flow of the to-be-joined object W. Moreover, the second part 42 which is the softened part of the second member W2 enters into the first part 41 which is the softened part of the first member W1, and therefore, the anchoring structure is formed.

Next, the control device 30 drives the linear driver 7 so that the tip end of the tool 10 reaches a second position (Step S203). Note that the positional information on the tip end of the tool 10 is detected by the position detector (not illustrated) and is outputted to the control device 30.

Here, the second position is a position set arbitrarily within a range larger than 0% and less than 100%, when the surface of the second member W2 which contacts the first member W1 is set as 0% and the surface of the second member W2 which contacts the support 6 is set as 100%. Note that, in terms of increasing the joining strength, the second position is desirably closer to the surface of the second member W2 which contacts the support 6, and it may be 25% or more, may be 50% or more, may be 75% or more, may be 80% or more, may be 90% or more, or may be 95% or more.

Then, when the tip end of the tool 10 reaches the second position, the control device 30 drives the linear driver 7 so that the tip-end part of the tool 10 separates from the to-be-joined object W (Step S204).

Next, the control device 30 drives the linear driver 7 so that the tip end of the tool 10 reaches the first position (Step S205), and then drives the linear driver 7 so that the tip-end part of the tool 10 separates from the to-be-joined object W (Step S206).

Therefore, the softened second member W2 in the bottom Wb1 of the recess Wb adheres (sticks or agglutinate) to the tip-end part of the tool 10. Alternatively, the part of the softened second member W2 in the bottom Wb 1 of the recess Wb is pushed away by the rotation of the tip-end part of the tool 10, and the through-hole is formed in the bottom Wb1 of the recess Wb.

Next, the control device 30 stops the rotary driver 8 (Step S207), and ends this program.

The friction welding apparatus 1 of Modification 1 configured in this way also has the same operation and effects as the friction welding apparatus 1 according to Embodiment 2.

### (Embodiment 3)

A friction welding apparatus according to Embodiment 3 is a friction welding apparatus which joins the to-be-joined object having the first member and the second member by softening the to-be-joined object with frictional heat. The apparatus includes the tool which is formed cylindrically, and is rotatable about its axis and reciprocatable in the direction along the axis, the rotary driver which rotates the tool about the axis, the linear driver which reciprocates the tool along the axis, a cutting tool, a first driver which drives the cutting tool, and the control device. The first member is disposed opposing to the tool and is made of a different type of material from the second member. The control device (B) controls the linear driver and the rotary driver so that the tool is rotated about the axis while the tip-end part of the tool is pressed against the to-be-joined object to form the recess in the to-be-joined object so that the softened second member sticks into the softened first member to join the to-be-joined object, and after (B), (C) controls the first driver so that the through-hole is formed in the recess by the cutting tool.

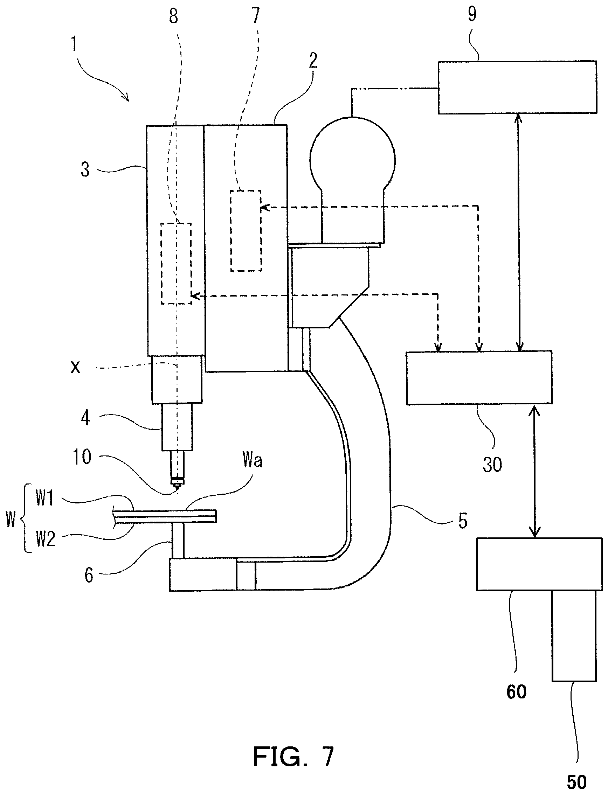

Below, one example of the friction welding apparatus according to Embodiment 3 is described in detail with reference to Figs. 7 to 9.

### [Configuration of Friction Welding Apparatus]

Fig. 7 is a schematic view illustrating an outline structure of the friction welding apparatus according to Embodiment 3.

As illustrated in Fig. 7, a friction welding apparatus 1 according to Embodiment 3 has fundamentally the same structure as the friction welding apparatus 1 according to Embodiment 1, but it differs in that a cutting tool 50 and a first driver 60 which drives the cutting tool 50 are further provided.

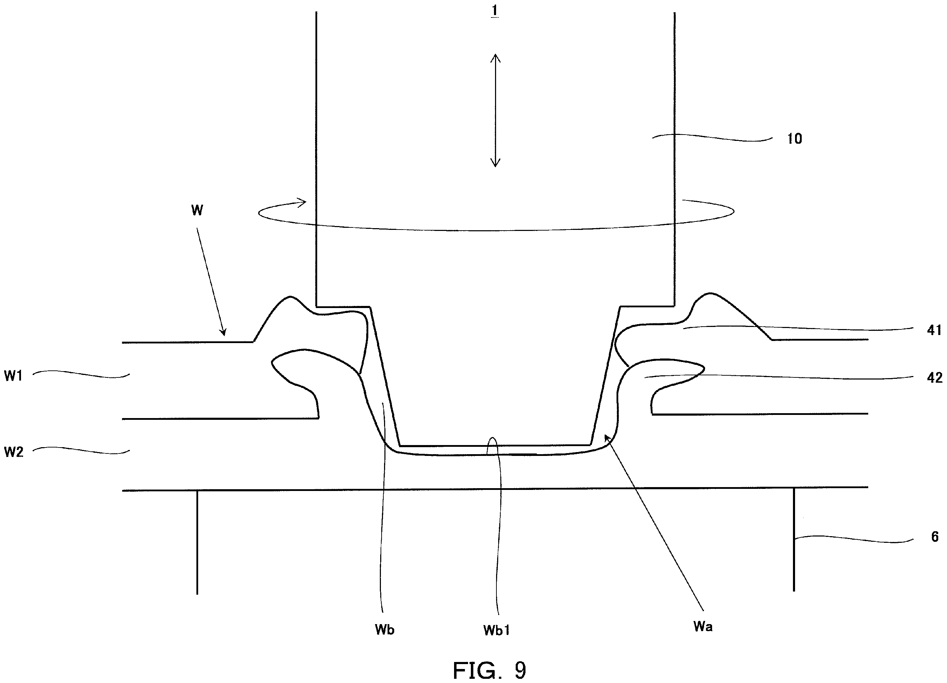

The cutting tool 50 forms the through-hole in the bottom Wb1 of the recess Wb formed in the to-be-joined part Wa of the to-be-joined object W (see Fig. 9). For example, the cutting tool 50 may be a drill, or may be a tool of which a tip-end part is smaller than an area of the tip-end part of the tool 10 (a cross-sectional area in a direction perpendicular to the axis X).

The first driver 60 may be any kind of drivers, as long as it drives the cutting tool 50, and for example, it may be a robot which holds the cutting tool 50. The robot which constitutes the first driver 60 may be comprised of the robotic arm 9, or may be comprised of a robotic arm which is different from the robotic arm 9.

### [Operation of Friction Welding Apparatus (Method of Operating Friction Welding Apparatus)]

Next, a method of operating the friction welding apparatus 1 according to Embodiment 3 is described with reference to Figs. 7 to 9. Note that the following operations are performed by the processor of the control device 30 reading the program stored in the memory.

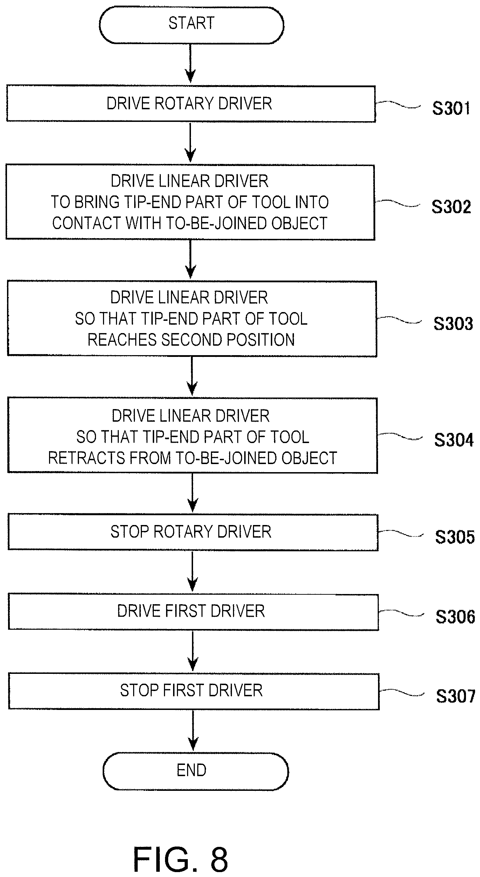

Fig. 8 is a flowchart illustrating one example of operation of the friction welding apparatus according to Embodiment 3. Fig. 9 is a schematic view illustrating a substantial part of the friction welding apparatus according to Embodiment 3, and illustrates a state where the tool performs the friction welding.

First, the operator places the to-be-joined object W on the upper surface of the support 6. Next, the operator operates the input device (not illustrated) to input the joining execution of the to-be-joined object W into the control device 30.

Then, as illustrated in Fig. 8, the control device 30 drives the rotary driver 8 to rotate the tool holder 4 and the tool 10 at the given rotational speed (e.g., 50 to 6,000rpm) (Step S301). Next, while the tool holder 4 and the tool 10 are rotated, the control device 30 drives the linear driver 7 to bring the tip-end part of the tool 10 into contact with the point joining part Wa of the to-be-joined object W (Step S302).

At this time, the control device 30 controls the linear driver 7 so that the tool 10 is pressed against the to-be-joined object W by the given pressing force set beforehand (e.g., 4kN to 70kN). Note that the given rotational speed and the given pressing force may be suitably set beforehand by an experiment etc.

Therefore, the point joining part Wa on the first member W1 and the second member W2 is softened by the tip-end part of the tool 10 to cause the plastic flow of the to-be-joined object W. Moreover, the second part 42 which is the softened part of the second member W2 enters into the first part 41 which is the softened part of the first member W1, and therefore, the anchoring structure is formed.

Next, the control device 30 drives the linear driver 7 so that the tip end of the tool 10 reaches the second position (Step S303; see Fig. 9). Note that the positional information on the tip end of the tool 10 is detected by the position detector (not illustrated) and is outputted to the control device 30.

Here, the second position is set arbitrarily within the range larger than 0% and less than 100%, when the surface of the second member W2 which contacts the first member W1 is set as 0% and the surface of the second member W2 which contacts the support 6 is set as 100%. Note that, in terms of increasing the joining strength, the second position is desirably closer to the surface of the second member W2 which contacts the support 6, and it may be 25% or more, may be 50% or more, may be 75% or more, may be 80% or more, may be 90% or more, or may be 95% or more.

Then, when the tip end of the tool 10 reaches the second position, the control device 30 drives the linear driver 7 so that the tip-end part of the tool 10 separates from the to-be-joined object W (Step S304). Next, the control device 30 stops the rotary driver 8 (Step S305).

Next, the control device 30 drives the first driver 60 to cause the cutting tool 50 to form the through-hole in the bottom Wb1 of the recess Wb in the point joining part Wa (Step S306). Next, the control device 30 stops the first driver 60, and ends this program.

The friction welding apparatus 1 according to Embodiment 3 configured in this way also has similar operation and effects to the friction welding apparatus 1 according to Embodiment 1.

Note that, although in the friction welding apparatus 1 according to Embodiment 3 the control device 30 drives the first driver 60 to cause the cutting tool 50 to form the through-hole in the bottom Wb1 of the recess Wb, it is not limited to this configuration. For example, the operator may use the cutting tool 50 to form the through-hole in the bottom Wb1 of the recess Wb.

### [Modification 1]

Next, modifications of the friction welding apparatuses according to Embodiments 1-3 are described.

A friction welding apparatus in Modification 1 is the friction welding apparatus according to any one of Embodiments 1-3, in which the first member is comprised of a plurality of first sub members.

Below, one example of the friction welding apparatus in Modification 1 is described with reference to Fig. 9.

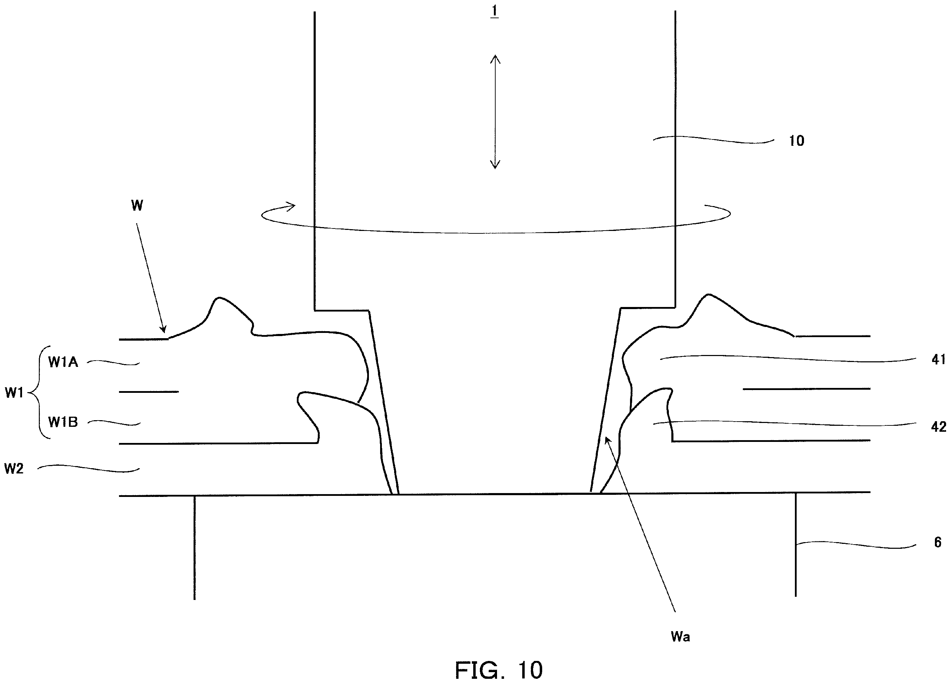

Fig. 10 is a schematic view illustrating a substantial part of the friction welding apparatus in Modification 1, and illustrates the state where the friction welding is performed.

As illustrated in Fig. 10, the friction welding apparatus 1 in Modification 1 has fundamentally the same structure as the friction welding apparatus 1 according to Embodiment 1, but it differs in that the first member W1 is comprised of a plurality of first sub members W1A and W1B. The plurality of first sub member may be configured so that at least one of the first sub members is made of a different type of material from the second member W2.

For example, the second member W2 is made of steel, and the first sub members W1A and W1B may be made of aluminum. In this case, as illustrated in Fig. 10, the first sub members W1A and W1B are softened by friction with the tip-end part of the tool 10, and the softened parts are agitated and joined. Therefore, the second part 42 of the second member W2 enters (sticks) into the part of the first sub members W1A and W1B which is softened, agitated, and joined (the first part 41).

The friction welding apparatus 1 in Modification 1 configured in this way also has similar operation and effects to the friction welding apparatus 1 according to Embodiment 1.

### [Modification 2]

A friction welding apparatus in Modification 2 is the friction welding apparatus according to any one of Embodiments 1-3 (including the friction welding apparatus in Modification 1), where the second member is comprised of a plurality of second sub members.

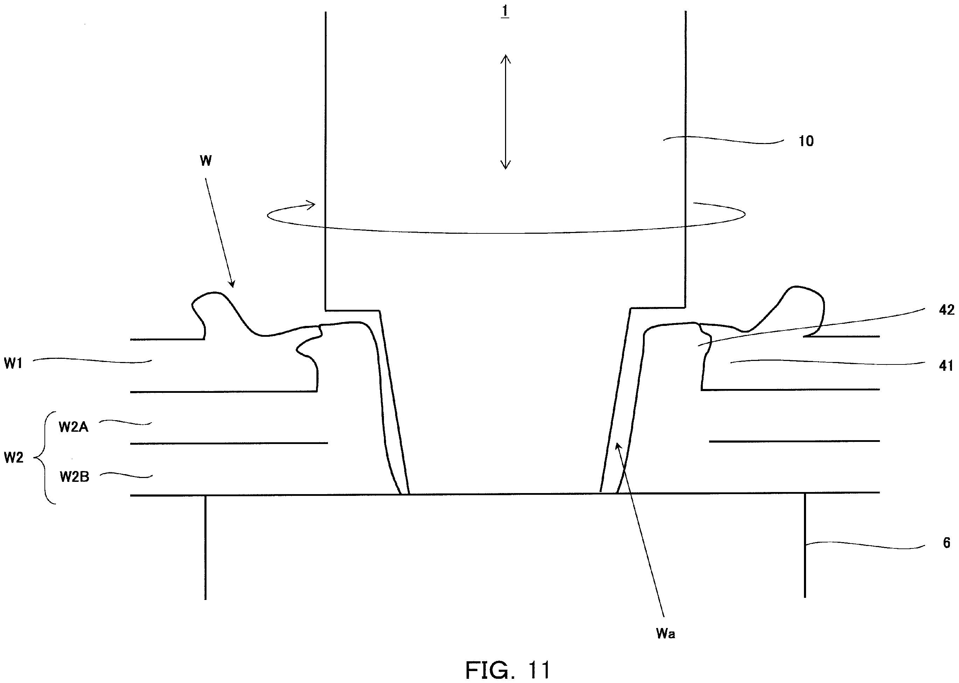

Below, one example of the friction welding apparatus in Modification 2 is described with reference to Fig. 11.

Fig. 11 is a schematic view illustrating a substantial part of the friction welding apparatus in Modification 2, and illustrates the state where the friction welding is performed.

As illustrated in Fig. 11, the friction welding apparatus 1 in Modification 2 has fundamentally the same structure as the friction welding apparatus 1 according to Embodiment 1, but it differs in that the second member W2 is comprised of a plurality of second sub members W2A and W2B. The plurality of second sub members may be configured so that at least one of the second sub members is made of different type of material from the first member W1.

For example, the second sub members W2A and W2B are made of steel, and the first member W1 may be made of aluminum. In this case, as illustrated in Fig. 11, the second sub members W2A and W2B are softened by friction with the tip-end part of the tool 10, and the softened parts are agitated and joined. Therefore, the part of the second sub members W2A and W2B which is softened, agitated, and joined (the second part 42) enters (sticks) into the first part 41.

The friction welding apparatus 1 in Modification 2 configured in this way also has similar operation and effects to the friction welding apparatus 1 according to Embodiment 1.

It is apparent for the person skilled in the art that many improvements or other embodiments of the present disclosure are possible from the above description. Therefore, the above description is to be interpreted only as illustration, and it is provided in order to teach the person skilled in the art the best mode that implements the present disclosure. The details of the configurations and/or the functions may be changed substantially without departing from the spirit of the present disclosure. Moreover, various inventions may be formed by suitable combinations of the plurality of components disclosed in the above embodiments.

### INDUSTRIAL APPLICABILITY

The friction welding apparatus and the method of operating the same of the present disclosure are useful, because they can realize the appropriate corrosion resistance even if the plurality of members made of different materials are joined by the friction welding method.

### DESCRIPTION OF REFERENCE CHARACTERS

- 1: Friction Welding Apparatus
- 2: Base Body
- 3: Movable Body
- 4: Tool Holder
- 5: Curved Frame
- 6: Support
- 7: Linear Driver
- 8: Rotary Driver
- 9: Robotic Arm
- 10: Tool
- 30: Control Device
- 40: Through-hole
- 41: First Part
- 42: Second Part
- 50: Cutting Tool
- 60: First Driver
- W: To-be-joined Object
- W1: First Member
- W1A: First Sub Member
- W1B: First Sub Member
- W2: Second Member
- W2A: Second Sub Member
- W2B: Second Sub Member
- Wa: Point Joining Part
- Wb: Recess
- Wb1: Bottom
- X: Axis

## Claims

1. A friction welding apparatus configured to join a to-be-joined object having a first member and a second member by softening the to-be-joined object with frictional heat, comprising:
a tool formed cylindrically, and rotatable about an axis thereof and reciprocatable in a direction along the axis;
a rotary driver configured to rotate the tool about the axis;
a linear driver configured to reciprocate the tool along the axis; and
a control device,
wherein the first member is disposed opposing to the tool and is made of a different type of material from the second member, and
wherein the control device (A) controls the linear driver and the rotary driver so that the tool is rotated about the axis while a tip-end part of the tool is pressed against the to-be-joined object to form a through-hole in the to-be-joined object so that the softened second member sticks into the softened first member to join the to-be-joined object.

2. The friction welding apparatus of claim 1, wherein, during (A), the control device controls the linear driver and the rotary driver so that the tip-end part of the tool penetrates the second member of the to-be-joined object.

3. The friction welding apparatus of claim 1, wherein, during (A), the control device controls the linear driver and the rotary driver so that:
(A1) the tool is rotated about the axis while the tip-end part of the tool is pressed against the to-be-joined object to form a recess in the to-be-joined object so that the softened second member sticks into the softened first member to join the to-be-joined object; and
(A2) the tip-end part of the tool reaches a given first position set beforehand to form the through-hole in the to-be-joined object.

4. A friction welding apparatus configured to join a to-be-joined object having a first member and a second member by softening the to-be-joined object with frictional heat, comprising:
a tool formed cylindrically, and rotatable about an axis thereof and reciprocatable in a direction along the axis;
a rotary driver configured to rotate the tool about the axis;
a linear driver configured to reciprocate the tool along the axis;
a cutting tool;
a first driver configured to drive the cutting tool; and
a control device,
wherein the first member is disposed opposing to the tool and is made of a different type of material from the second member, and
wherein the control device (B) controls the linear driver and the rotary driver so that the tool is rotated about the axis while a tip-end part of the tool is pressed against the to-be-joined object to form a recess in the to-be-joined object so that the softened second member sticks into the softened first member to join the to-be-joined object, and then (C) controls the first driver so that a through-hole is formed in the recess by the cutting tool.

5. The friction welding apparatus of any one of claims 1 to 4, wherein the first member is comprised of a plurality of first sub members.

6. The friction welding apparatus of any one of claims 1 to 5, wherein the second member is comprised of a plurality of second sub members.

7. A method of operating a friction welding apparatus configured to join a to-be-joined object having a first member and a second member by softening the to-be-joined object with frictional heat, the friction welding apparatus comprising:
a tool formed cylindrically, and rotatable about an axis thereof and reciprocatable in a direction along the axis;
a rotary driver configured to rotate the tool about the axis; and
a linear driver configured to reciprocate the tool along the axis,
wherein the first member is disposed opposing to the tool and is made of a different type of material from the second member, and
the method comprising the step of:
(A) operating the linear driver and the rotary driver so that the tool is rotated about the axis while a tip-end part of the tool is pressed against the to-be-joined object to form a through-hole in the to-be-joined object so that the softened second member sticks into the softened first member to join the to-be-joined object.

8. The method of claim 7, wherein, during (A), the linear driver and the rotary driver are operated so that the tip-end part of the tool penetrates the second member of the to-be-joined object.

9. The method of claim 7, wherein, during (A), the linear driver and the rotary driver are operated so that:
(A1) the tool is rotated about the axis while the tip-end part of the tool is pressed against the to-be-joined object to form a recess in the to-be-joined object so that the softened second member sticks into the softened first member to join the to-be-joined object; and
(A2) the tip-end part of the tool reaches a given first position set beforehand to form the through-hole in the to-be-joined object.

10. A method of operating a friction welding apparatus configured to join a to-be-joined object having a first member and a second member by softening the to-be-joined object with frictional heat, the friction welding apparatus comprising:
a tool formed cylindrically, and rotatable about an axis thereof and reciprocatable in a direction along the axis;
a rotary driver configured to rotate the tool about the axis;
a linear driver configured to reciprocate the tool along the axis;
a cutting tool; and
a first driver configured to drive the cutting tool,
wherein the first member is disposed opposing to the tool and is made of a different type of material from the second member, and
the method comprising the steps of:
(B) operating the linear driver and the rotary driver so that the tool is rotated about the axis while a tip-end part of the tool is pressed against the to-be-joined object to form a recess in the to-be-joined object so that the softened second member sticks into the softened first member to join the to-be-joined object; and
(C) then operating the first driver so that a through-hole is formed in the recess by the cutting tool.

11. The method of any one of claims 7 to 10, wherein the first member is comprised of a plurality of first sub members.

12. The method of any one of claims 7 to 11, wherein the second member is comprised of a plurality of second sub members.
